(19) Europäisches Patentamt
European Patent Office
Office européen des brevets

(11) **EP 0 994 401 B1**

## (12) EUROPEAN PATENT SPECIFICATION

(45) Date of publication and mention
of the grant of the patent:
**19.12.2007  Bulletin 2007/51**

(51) Int Cl.:
**G05F 1/573** (2006.01)

(21) Application number: **99120266.4**

(22) Date of filing: **11.10.1999**

(54) **Direct-current stabilization power supply device**

Gleichstromstabilisierungs-Stromversorgungsschaltung

Circuit d'alimentation avec stabilisateur à courant continu

(84) Designated Contracting States:
**DE FR IT**

(30) Priority: **12.10.1998  JP  28923598**
**30.03.1999  JP  8853799**

(43) Date of publication of application:
**19.04.2000  Bulletin 2000/16**

(73) Proprietor: **Sharp Kabushiki Kaisha**
**Osaka 545-8522 (JP)**

(72) Inventors:
• **Warita, Hirohisa**
**Shiki-gun,**
**Nara 636-0347 (JP)**

• **Nakajima, Akio**
**Kitakatsuragi-gun,**
**Nara 639-2151 (JP)**

(74) Representative: **Müller - Hoffmann & Partner**
**Patentanwälte,**
**Innere Wiener Strasse 17**
**81667 München (DE)**

(56) References cited:
**DE-A- 3 931 893        US-A- 3 771 021**
**US-A- 4 587 476        US-A- 4 593 338**
**US-A- 4 899 098**

## Description

The present invention relates to a direct-current stabilization power supply device in accordance with the precharacterizing part of claim 1 and also to such a direct-current stabilization power supply device having a short circuit protection circuit in accordance with the precharacterizing part of the independent claim 11.

A direct-current stabilization power supply device of that kind is known from US-A-4 593 338.

BACKGROUND OF THE INVENTION

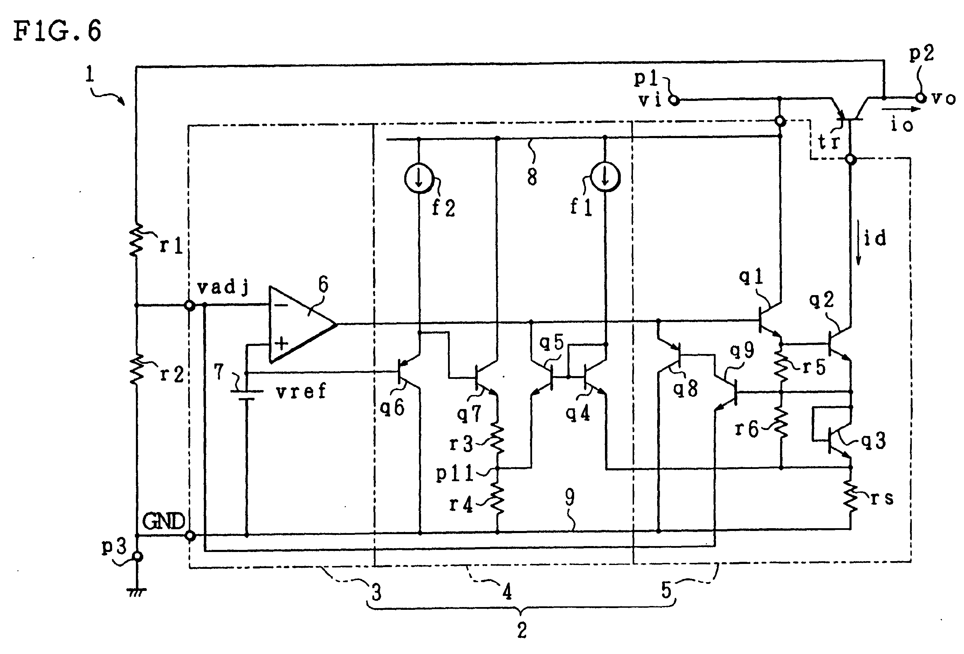

Fig. 6 is an electric circuit diagram showing a typical direct-current stabilization power supply device 1 of a conventional art. The direct-current stabilization power supply device 1 is constituted by a PNP bipolar transistor, etc., and is a three-terminal regulator, that has a two-chip structure including a control IC 2 and a power transistor tr being connected in series between an input terminal p1 and an output terminal p2, so as to be used for a relatively large current such as 3 to 10 [A]. The control IC 2 is provided with a constant voltage circuit 3, an overcurrent protective circuit 4, and a short-circuit protective circuit 5.

An output voltage vo to the output terminal p2 is applied to an inverted input terminal of an error amplifier 6 of the constant voltage circuit 3 via partial pressure resistances r1 and r2. And a non-inverted input terminal of the error amplifier 6 receives a base voltage vref of a reference voltage source 7. The smaller a partial pressure value vadj of the output voltage vo is as compared with the reference voltage vref, the error amplifier 6 derives a larger control current. The control current is applied to NPN transistors q1 and q2 that make a Darlington connection for controlling a base current id of the power transistor tr. Therefore, the smaller the output voltage vo is, the base current id becomes larger so as to realize a constant voltage operation for maintaining the output voltage vo at a certain level. The emitter of the transistor q2 is connected with a ground terminal p3 via a transistor q3 and a base resistance rs that make a diode connection.

The base resistance rs is connected with a power source line 8 of an input voltage vi via a transistor q4 and a constant current circuit f1 beside the overcurrent protective circuit 4. The transistor q4 and a transistor q5 constitute a current mirror circuit. The collector of the transistor q4 is connected with the output of the error amplifier 6, namely, the base of the transistor q1. In the overcurrent protective circuit 4, between the power source line 8 of the input voltage vi and a power source line 9 of a ground potential, a serial circuit having a constant current circuit f2 and a transistor q6 is connected. Further, between the power source lines 8 and 9, a serial circuit having a transistor q7 and partial resistances r3 and r4 is connected. The reference voltage vref is applied to the base of the PNP transistor q6 and is applied to partial pressure resistances r3 and r4 at the NPN transistor q7 whose base is connected with the emitter of the transistor q6. A connecting point p11 between the partial pressure resistances r3 and r4 is connected with the emitter of the transistor q5.

Here, when the power transistor tr has a current amplification factor of hfe, an output current io of the power transistor tr is represented by:

$$io = id \times hfe \quad \cdots (1).$$

Meanwhile, a voltage vbe between the base and emitter of a transistor is represented by:

$$vbe = k \cdot T/q \cdot \ln(ic/is) \quad \cdots (2).$$

Here, k stands for a Boltzmann constant, q stands for a charge amount, T stands for an absolute temperature, is stands for a reverse saturation current, and ic stands for a collector current.

Therefore, for example, when the transistor q4 and q5 have an emitter area ratio of 1:1,

$$vref \times r4/(f3 + r4) = id \times rs \quad \cdots (3)$$

is established. Namely, when the base current id satisfies the equation(3), the transistor q5 is brought into conduction, a control current is bypassed from the error amplifier 6, and the base current id is reduced, so as to perform an overcurrent protecting operation.

When the overcurrent protecting operation is carried out as described above so as to reduce the base current id and the output voltage vo, the short-circuit protective circuit 5 further reduces the base current id as follows: in the short-circuit protective circuit 5, a PNP transistor q8 is connected between the base of the transistor q1 and the power source line 9 which is at a ground level, and the transistor q8 is controlled by an NPN transistor q9. The collector of the transistor q9 is connected with the base of the transistor q8, and the partial pressure value vadj of the output voltage vo is applied from the partial resistances r1 and r2 to the emitter of the transistor q9. The base of the transistor q9 is connected with a connecting point between the transistors q2 and q3. Moreover, between (a)a connecting point of the emitter of the transistor q1 and the base of the transistor q2 and (b) the base of the transistor q9, a resistance r5 is connected, and a resistance r6 is connected in parallel with the transistor q3.

Hence, when the partial pressure value vadj is reduced due to an output short circuit, etc., and the transistor q9 is conducting, the transistor q8 is brought into conduction and a control current applied to the transistor q1 is bypassed, so as to perform a short-circuit protective operation. Thus, in this case, a base current ids and a short-circuit current ios are determined by the following equations.

$$\mathtt{ids\ =\ vbe(q9)/r6\quad \cdot\cdot\cdot(4)}$$

$$\mathtt{ios\ =\ ids\ \times\ hfe\quad \cdot\cdot\cdot(5)}$$

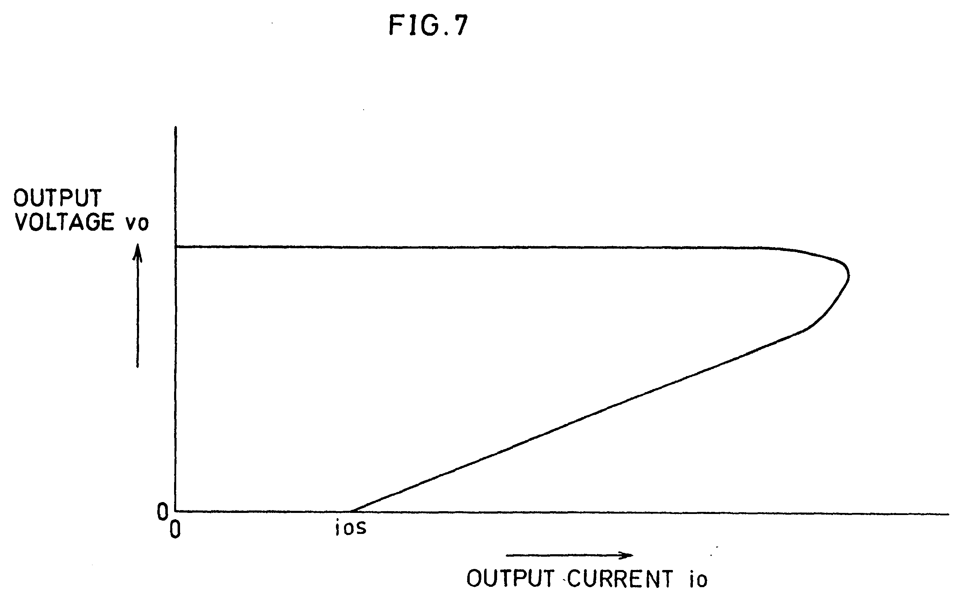

With this arrangement, as shown in Fig. 7, it is possible to achieve a so-called fold-back characteristic between the output current vo and the output current io.

In the case of the direct-current stabilization power supply device 1 having the above-mentioned construction, when the power transistor tr has, for example, a current amplification factor hfe(min) of 65 under saturation, the base current id needs to be at least 120[mA] in order to achieve the output current io = 7.5[A]. In view of a current reduction caused by irregularity of the process, it is necessary to set the base current id at, for example, 180[mA]. Meanwhile, when the power transistor tr is not saturated, in the case of the current amplification factor hfe(max) = 150, the maximum value of the output current io(max) is determined by the following equation.

$$\mathtt{io(max)\ =\ 180[mA]\ \times\ 150\ =\ 27[A]\quad \cdot\cdot\cdot(6)}$$

Thus, an output current which is about 3.6 times as large as a rating current of 7.5[A] may be applied. For instance, in the case of the input voltage vi = 7[V] and the output voltage vo = 3[V], the power transistor tr is supplied with power of:

$$\mathtt{P\ =\ (vi\ -\ vo)\ \times\ io(max)\ =\ (7\ -\ 3)\ \times\ 27\ =\ 108[W]\quad \cdot\cdot\cdot(7)\,.}$$

Further, in the case of a short circuit, larger power is applied, so that it is necessary to form an emitter area of the power transistor tr that is sufficiently larger than a rating value, resulting in a costly chip of the power transistor tr. Furthermore, in a load-side circuit, a current suppressing operation is not performed until the maximum current io(max), so that the load-side circuit needs to have a construction which responds to an excessive current. Moreover, in the direct-current stabilization power supply device 1 having the above-mentioned construction, the minimum operating voltage vi(min) is determined by the following equation.

$$\mathtt{vi(min) = id \times rs + vbe(q3) + vbe(q2) + vbe(q1) + vce \qquad \ldots(8)}$$

The problem is that the minimum operating voltage vi(min) is high. Here, vce represents a voltage between the collector and emitter of a PNP transistor which is located between the power source line 8 and the output terminal of the input voltage vi.

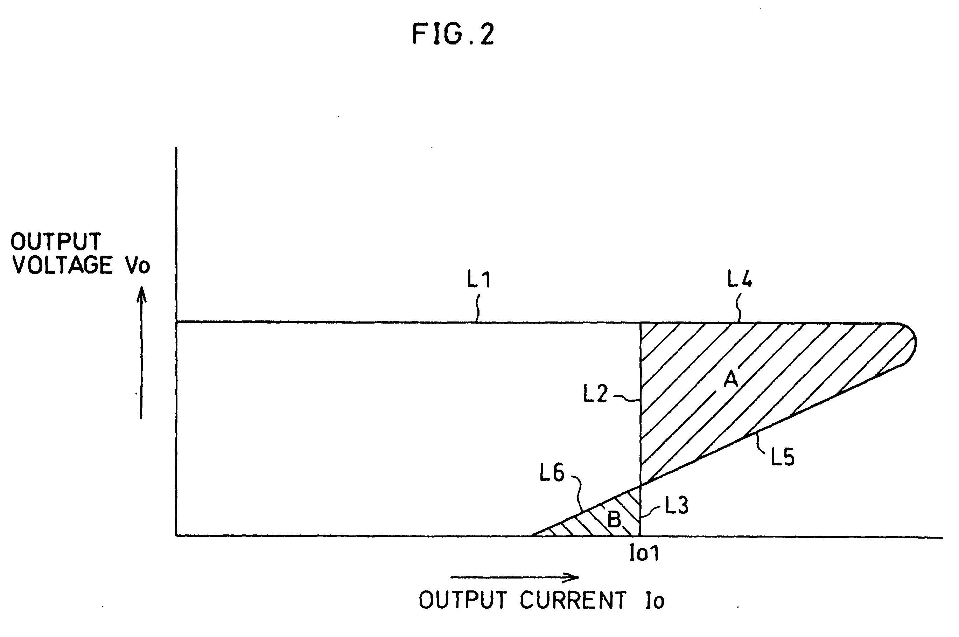

US-A-4,593,338 which is in accordance with the precharacterizing parts of the independent claims discloses a constant voltage power supply circuit, wherein a control transistor is connected between a power supply terminal and an output terminal. The base bias of the control transistor is controlled by bias control transistors, thereby the output voltage is maintained at a constant voltage. An overcurrent state is detected by a current control detecting transistor, and the base bias of the control transistor is controlled by the bias control transistors, so as to prevent the overcurrrent. The current control detecting transistor further detects the time when the potential of the output terminal becomes approximately 0 V by, e. g., short-circuiting of a load, so as to control the base bias of the control transistor through the bias control transistors, thereby the current to the load is decreased to a value considerably smaller than a limited value for preventing the overcurrent (refer to Fig. 2 thereof).

US-A-4,899,098 discloses a series voltage regulator including a protective circuit that detects the collector current from a PNP power transistor and the collector-emitter voltage thereof. Such current and voltage signals are generated, respectively, by an auxiliary PNP transistor having a collector current which is proportional to that of the PNP power transistor, and by a circuit connected between the emitter and the collector of the PNP power transistor. The collector current and collector emitter voltage signals are processed by a circuit which, whenever the current and voltage values are greater than preset maximum values, reduces the PNP power transistor current and maintains it within permissible limits. The protective circuit does not affect the minimum voltage drop between the input and output of the regulator and may be dimensioned so as to use the maximum extent of the S.O.A. of the PNP power transistor (refer to Fig. 2a).

DE 39 31 893 A discloses a direct-current stabilization power supply device having an overcurrent protective circuit with fold-back-characteristic. The overcurrent protective circuit requires only a small voltage drop over the stabilization circuit. Therefore, in said stabilization circuit having a series transistor in emitter base circuit driven by an operational amplifier through a crosspath of the circuit, an additional transistor is coupled to the input of the operational amplifier. When the current limiting process begins and the output voltage of the circuit drops, the transistor generates a current additionally supplied to the base of the existing current limiting transistor which therefore achieves the fold-back action.

SUMMARY OF THE INVENTION

The objective of the present invention is to provide a direct-current stabilization power supply device which can reduce the cost of a PNP transistor chip by adopting an overcurrent protective operation with high accuracy, and which can operate at low voltage.

To achieve the above object, the present invention provides a direct-current stabilization power supply device in which a power transistor and a control section are sealed into a package, said power transistor acting as a power element between an input and an output terminal, said control section has an error amplifier comparing an output voltage of said power transistor with a predetermined reference voltage for controlling a base current of said power transistor in accordance with a difference between said output voltage and said predetermined reference voltage, wherein said control section has a short-circuit protective circuit including:

a base resistance for detecting a base current of said power transistor,
a base current generating section which is disposed between said base resistance and a base of said power transistor and which amplifies a control current corresponding to a difference between said output voltage and said reference voltage so as to generate said base current,

characterized in that said control section further includes
a referenced resistance,
a current drawing section which connects said referenced resistance between power source lines and which draws a larger current from an input power source line into said referenced resistance as said output voltage becomes lower,
a partial potential resistance divider section for dividing a terminal voltage of said referenced resistance, and
a current mirror circuit for adjusting said control current so as to balance a partial potential value of said partial potential resistance divider section with a voltage between the terminals of said base resistance.

In accordance with an advantageous development thereof, the direct current stabilization power supply device may further comprise a current detection resistance formed in series with said power transistor, wherein said control section includes an overcurrent protective circuit which monitors a voltage between terminals of said current detection resistance and performs an overcurrent protective operation when a voltage between the terminals exceeds a predetermined value.

Further, the base current generating section may advantageously include a first and a second transistor, that make a Darlington connection.

Further, advantageously, the current drawing section may include a third and a fourth transistor.

According to an advantageous development, the direct-current stabilization power supply device of the present invention is further characterized in that a base of said fourth transistor is connected with an input terminal of said error amplifier to which said output voltage returns, and said referenced resistance is set so as to allow a base current of said fourth transistor to be equal to a base current of an input transistor of said error amplifier upon outputting a rated voltage.

Further, advantageously, the partial potential resistance divider section may include partial potential dividing resistances. This partial potential dividing resistances may be advantageously implemented so that a trimming adjustment can be performed by the latter on a resistance of a voltage source which generates said reference voltage.

Preferably, the power transistor is a PNP transistor.

Advantageously, the direct-current stabilization power supply device as described before may further comprise a series circuit, provided between power source lines, including a fifth transistor of which the base receives a constant voltage and the emitter is connected to a constant current source;

a third transistor of which a base is connected with a connecting point of the constant current source and the emitter of the fifth transistor and outputs emitter voltage corresponding to a voltage of the connecting point,

wherein one end of the referenced resistance is connected with the connecting point of the constant current source and the emitter of the fifth transistor.

With the above-mentioned arrangement, in the short-circuit protective circuit for realizing a so-called fold-back characteristic which reduces the output current as the output voltage becomes lower, an emitter potential of the third transistor Q3 is virtually equal to the terminal voltage of the referenced resistance Rr. When the terminal voltage is Va, the base current Ids in a short circuit is determined by the following equation:

$$Ids = \{Va \times R2/(R1 + R2)\}/Rs \qquad \dots (9)$$

Hence, it is possible to realize the fold-back characteristic for suppressing the base current Id which is fed via the second transistor Q2 as the output voltage becomes lower.

In this case, in an error amplifier, when the PNP transistor, which is disposed between a power source line and an output terminal of an input voltage Vi, has a voltage of Vce between the collector and emitter, a minimum operation voltage Vi(min) is expressed by the following equation:

$$Vi(min) = Id \times Rs + Vbe(Q2) + Vbe(Q1) + Vce \qquad \dots (10)$$

In comparison with the conventional direct-current stabilization power supply device 1 expressed by the equation (8), the operation voltage is reduced by nearly 1 Vbe, namely, nearly 1[V].

Hence, the output partial potential resistances do not supply the base current, so that even when the output partial potential resistances have high resistances for saving electricity, the base current does not cause a voltage drop at the output partial potential resistances; thus, it is possible to eliminate an error of the rated output voltage, that is resulted from irregularity of hFE of the input transistor.

For a fuller understanding of the nature and advantages of the invention, reference should be made to the ensuing detailed description taken in conjunction with the accompanying drawings.

BRIEF DESCRIPTION OF THE DRAWINGS

Fig. 1 is a block diagram schematically showing a construction of a direct-current stabilization power supply device in accordance with one embodiment of the present invention.

Fig. 2 is a graph showing an operation characteristic of the direct-current stabilization power supply device shown in Figs. 1 and 3.

Fig. 3 is an electric circuit diagram for specifically describing the construction of a control IC provided in the direct-current stabilization power supply device of Fig. 1.

Fig. 4 is an electric circuit diagram showing one example of the construction of an error amplifier provided in a constant voltage circuit.

Fig. 5 is an electric circuit diagram showing one example of the construction of a base voltage source provided in the constant voltage circuit.

Fig. 6 is an electric circuit diagram showing a typical direct-current stabilization power supply device of a conventional art.

Fig. 7 is a graph showing an operation characteristic of the direct-current stabilization power supply device shown in Fig. 6.

## DETAILED DESCRIPTION OF THE PREFERRED EMBODIMENTS

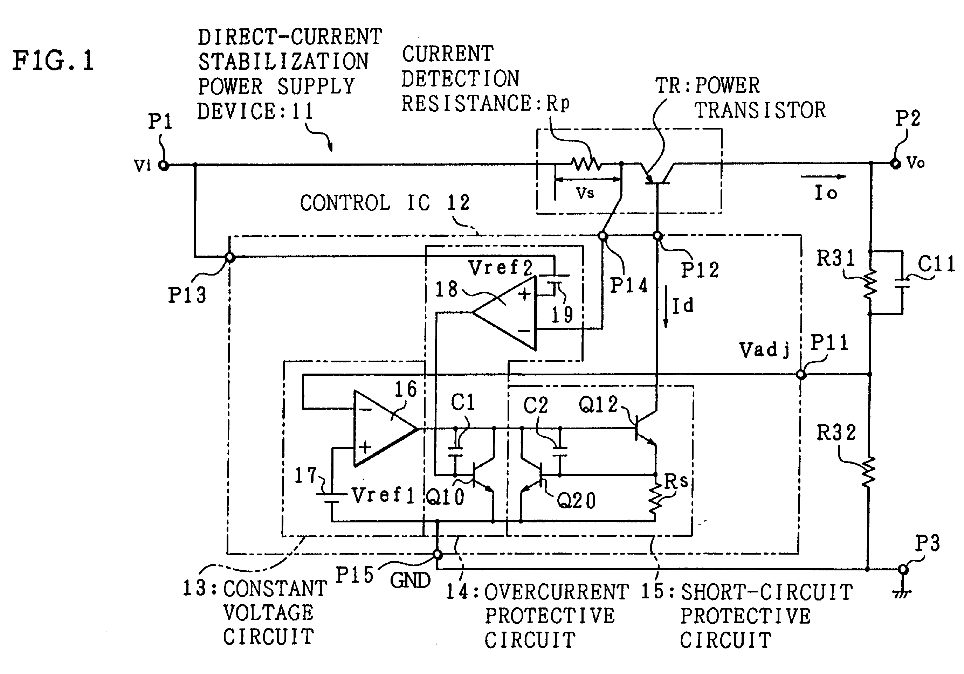

Referring to Figs. 1 through 5, the following explanation describes one embodiment of the present invention.

Fig. 1 is a block diagram schematically showing a construction of a direct-current stabilization power supply device 11 in accordance with one embodiment of the present invention. The direct-current stabilization power supply device 11 is a so-called three-terminal regulator including an input terminal P1, an output terminal P2, and a ground terminal P3. An input voltage Vi from the input terminal P1 is stabilized to a predetermined constant voltage Vo and is outputted from the output terminal P2. The direct-current stabilization power supply device 11 is, for example, used for a relatively large current of 5 to 10 [A]. Schematically, two chips of (a) a power transistor TR achieved by a PNP bipolar transistor, etc. and (b) a control IC 12 for controlling a base current Id of the power transistor TR are disposed on a lead frame and are sealed with resin as one package.

The control IC 12 is provided with a constant voltage circuit 13, an overcurrent protective circuit 14, and a short-circuit protective circuit 15. An error amplifier 16 of the constant voltage circuit 13 compares a partial pressure value Vadj with a reference voltage Vref1 applied from a reference voltage source 17 to a run-inverted input terminal, and applies a control current, which corresponds to the difference between the partial potential value Vadj and the predetermined reference voltage Vref1, into the base of a control transistor Q12. The partial potential value Vadj is obtained by dividing the output voltage Vo, which is applied from a terminal P11 of the control IC 12 to an inverted input terminal, at output potential pressure resistances R31 and R32. The control transistor Q12 amplifies the control current and absorbs the base current Id of the power transistor TR form an input terminal p12 of the control 1C 12. Thus, a constant voltage operation is performed as follows: the smaller the partial potential pressure value Vadj of the output voltage Vo is as compared with the reference voltage Vref1, the base current increases so as to maintain the output voltage Va at a desired constant value. A condenser C11 for compensating a phase is connected in parallel between the terminals of the output partial pressure resistance R31.

In the present invention, a current detecting resistance Rp is integrally formed with the power transistor TR and is connected in series in a through line between the input terminal P1 and the output terminal P2. A between- terminal voltage Vs of the current detecting resistance Rp is applied from input terminals P13 and P14 of the control IC12 to the overcurrent protective circuit 14. In the overcurrent protective circuit 14, the between-terminal voltage Vs is compared with the reference voltage Vref2, which is obtained in a reference voltage, source 19, in an error amplifier 18. When the between-terminal voltage Vs exceeds a reference voltage Vref2, the error amplifier 18 brings into conduction a control transistor Q10 located between the base of the control transistor Q12 and a ground terminal P15, and bypasses the control current, so as to suppress the base current Id.

As shown in reference numerals L1-L2-L3, this arrangement makes it possible to realize a drooping characteristic which maintains an output current Io at a certain value of Io1 even when the output voltage Vo decreases, so as to achieve an overcurrent protective operation in response to an overload.

Further, in the short-circuit protective circuit 15, a base resistance Rs changes the base current Id into voltage. When the voltage between the terminals exceeds a predetermined value, a control transistor Q20 is conducting so as to bypass a control current from the error amplifier 16 to the control transistor Q12. Consequently, as shown in Fig. 2, it is possible to achieve a fold-back characteristic indicated by reference numerals L1-L4-L5-L6.

Between the collectors and bases of the control transistors Q10 and Q20, condensers C1 and C2 are respectively disposed for preventing oscillation.

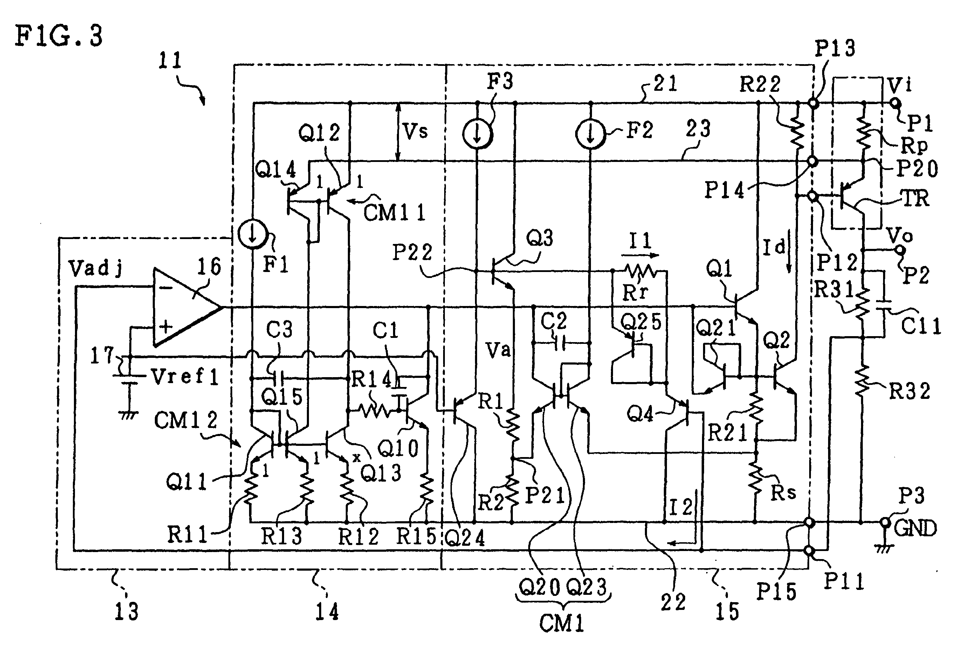

Fig. 3 is an electric circuit diagram for specifically describing the control IC 12 of the direct-current stabilization power supply device 11 having the above-mentioned construction. In Fig. 2, those members that correspond to those shown in Fig. 1 are indicated by the same reference numerals and the description thereof is omitted. In the overcurrent protective circuit 14, between a high-level power source line 21 which is connected from the terminal P13 to the input terminal P1, and a low-level power source line 22 which is connected from the terminal P15 to the ground terminal P3, a series circuit including a constant current source F1, a transistor Q11 having a diode connection, and a resistance R11 is connected. Further, between the power source lines 21 and 22, a series circuit including the transistor Q12, a transistor Q13, and a resistance R12 is connected. Furthermore, between a ground line 22 and a line 23 which is connected via the terminal P14 to a connecting point P20 of the current detection resistance Rp and a power transistor TR, a series circuit including a transistor Q14, a transistor Q15, and a resistance R13 is connected.

The PNP transistors Q12 and Q14 form a current mirror circuit CM11 so as to have the same emitter area ratios. The PNP transistors Q11, Q15, and Q13 form a current mirror circuit CM12 so as to have an emitter area ratio of 1 : 1 : x.

Therefore, when a potential difference between the lines 21 and 23, namely, the voltage Vs is found by the following equation:

$$Vs = k \cdot T/q \cdot ln(x) \quad \cdots (11),$$

the transistor Q10, which is connected to the collector of the transistor Q13 via a resistance R14, is brought into conduction and the control current is fed through a resistance R15 so as to complete an overcurrent protective operation.

In this case, when the output current Io has a rated current value of Iou, in view of irregularity of the process, it is possible to reduce an overcurrent protective level Iop to around:

$$Iop = 2 \times Iou \quad \cdots (12).$$

Between the collectors of the control transistors Q11 and Q13, a condenser C3 is provided for preventing an oscillation.

Meanwhile, in the short-circuit protective circuit 15, the control current from the error amplifier 16 is amplified by two-level transistors Q1 and Q2 that make a Darlington connection and correspond to the control transistor Q12. Between the base and emitter of the transistor Q2, a resistance R21 for a bias is disposed. Also, between the base and emitter of the transistor Q1, a transistor Q21 is disposed so as to act as a diode having a reversed polarity, in order to improve a transient responsivity.

Between the terminals P12 and P13, a resistance R22 for a bias is disposed. When the transistor Q2 pulls in the base current Id, a current passes through from the resistance R22 as well so as to generate a voltage between the terminals for bringing the power transistor TR into conduction. The base current Id is applied from the transistor Q2 to the base resistance Rs. Further, a current is applied from a constant current source F2 via a transistor Q23 to the base resistance Rs. The transistor Q23 forms a current mirror circuit CM1 with the control transistor Q20. the collector of the control transistor Q20 is connected with the base of the transistor Q1, and the emitter is connected with a partial pressure point P21 of partial potential pressure resistances R1 and R2 in a series circuit, which includes the partial potential resistances R1 and R2 and the transistor Q3 between the power source lines 21 and 22. The base of the transistor Q3 is connected with a connecting point P22 of a series circuit, which includes a transistor Q24 and a constant current source F3 between the power source lines 21 and 22. The base of the transistor Q24 is connected with the reference voltage source 17.

The connecting point P22 is connected with the low-level power source line 22 via a transistor Q25 making a diode connection and is connected with the power source line 22 via a series circuit including a referenced resistance Rr and a transistor Q4. The partial pressure value Vadj of the output voltage Vo is applied to the base of the transistor Q4.

Therefore, in the case of a short cut (Vadj = 0), the transistor Q4 is conducting, and when a current of Ii passes through the reference resistance Rr, according to the following equation,

$$Va = Vbe(Q4) + I1 \times Rr - Vbe(Q3) \qquad \ldots (13),$$

an emitter potential Va of the transistor Q3 can be expressed by $I1 \times Rr$. In this case, a current Ids passing through the base resistance Rs is set in accordance with the following equation:

$$Ids = \{Va \times R2/(R1 + R2)\}/Rs \quad \cdots (9)$$

so as to suppress the base current Ids of the power transistor TR. In other words, in the conventional direct-current stabilization power source supply device 1, a transistor q3 suppresses a short-circuit current in accordance with the equation (4); meanwhile, the direct-current stabilization power supply device 11 of the present invention suppresses a short-circuit current in accordance with the equation(9).

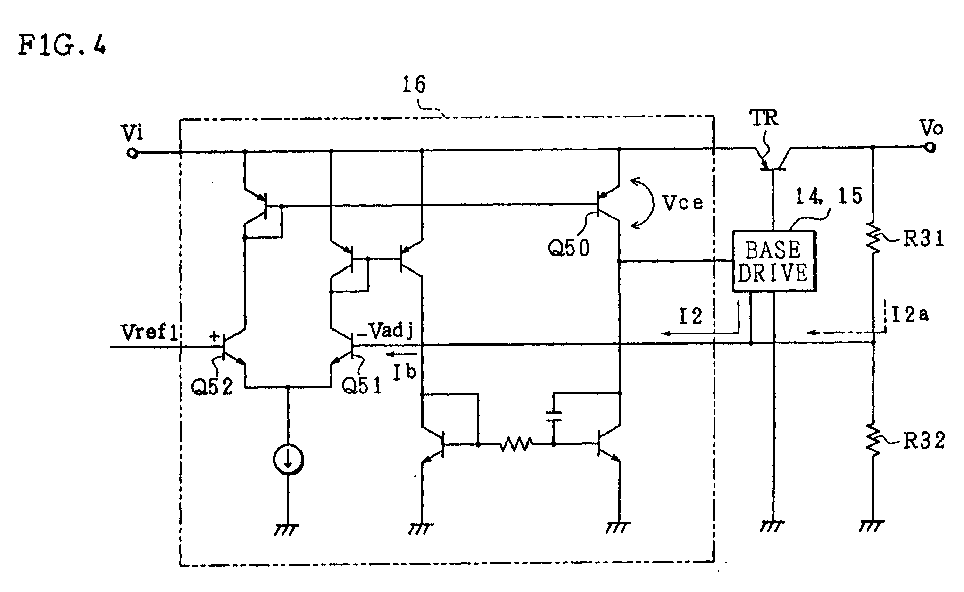

Here, as shown in Fig. 4, the error amplifier 16 is constituted by a differential pair having a pair of input transistors Q51 and Q52 for comparing voltages of two input terminals, and a PNP output transistor Q50 which amplifies and outputs a current corresponding to the comparison result of the two input terminals. When the output transistor Q50, which is disposed between a power source line and an output terminal in the error amplifier 16, has a voltage of Vce between the collector and emitter, the minimum operation voltage Vi(min) of the short-circuit protective circuit 22 is expressed by the following equation:

$$Vi(min) = Id \times Rs + Vbe(Q2) + Vbe(Q1) + Vce \quad \cdots (10)$$

In comparison with the equation (8), the Vi(min) is reduced by nearly 1 Vbe, namely, about 2.2[V]. Therefore, it is understood that a low-voltage operation can be performed.

Moreover, as shown in Fig. 6, the transistor q3, which has a voltage equivalent to the reduction of 1Vbe, is directly inserted into a base current line of the power transistor TR so as to require a large emitter area; thus, it is also possible to reduce the chip area of the control IC 12 by removing the transistor q3.

Furthermore, referring to Figs. 3 and 4, in the present invention, when the rated voltage is outputted, the resistance value of the referenced resistance Rr is subjected to a trimming adjustment so as to allow a base current I2 of the transistor Q4 to be the same as a base current Ib of the input transistor Q51 of the error amplifier 16. Namely, the trimming adjustment is carried out in accordance with the following equation.

$$Vadj + Vbe(Q4) + I1 \bullet Rr = Vref\,1 + Vbe(Q24) \quad \ldots(14)$$

With this arrangement, the output potential pressure resistance R31 does not supply the base current Ib, which is indicated by a reference numeral I2a of Fig. 4, to the input transistor Q51. Meanwhile, as described above, the output voltage Vo returns to the error amplifier 16 via output partial potential resistances R31 and R32, so that the direct-current stabilization power supply device generally applies the base current Ib via the output partial resistance R31.

Here, the following equation expresses the influence of the output partial potential resistances R31 and R32 on the output voltage Vo.

$$Vo = Vref1 \times (1 + R31/R32)R31 \times Ib$$
$$= Vref1 \times (1 + R31/R32)R31 \times Ic/hFE \quad \ldots(15)$$

Ic represents a collector current of the input transistor Q51, and hFE represents a current amplification factor of the input transistor Q51.

Therefore, the output voltage Va is affected by the current amplification factor hFE, which is indicated by an underline, of the input transistor Q51. In order to reduce the influence, the input of the error amplifier 16 may have a transistor including a plurality of levels so as to increase an input impedance; or the resistance values of the output partial pressure resistances R31 and R32 may be decreased so as to allow a current passing through the output partial potential resistances R31 and R32 to be sufficiently larger than the base current Ib by more than a four-digit value; thus, fluctuation in the feedback voltage Vadj, that is caused by a difference of the base current Ib, can be smaller.

However, in view of a smaller voltage, the error amplifier 16 is provided with a PNP or NPN transistor having a single input level and in view of smaller power consumption, the output partial potential resistances R31 and R32 have high resistances. Therefore, for example, when the reference voltage Vref1 is 1.25 [V] and the resistance values of the output partial resistances R31 and R32 are respectively 200 200 [KΩ], in the equation (15), the base current Ib of the input transistor Q51 is ignored; namely, the current amplification factor hFE is set at an infinite value, so that the underlined term becomes 0 and the output voltage Va is set at 2.5[V].

Meanwhile, in the case of Ic = 20 [μA] and hFE = 100, Ib = 0.2 [μA] and Vo = 2.54 [V] are obtained. Further, in the case of hFE = 80, Vo = 2.55 [V] is obtained, and in the case of hFE = 200, Vo = 2.52 [V] is obtained.

Therefore, as described above, the resistance value of the referenced resistance Rr is subjected to a trimming adjustment so as to allow the base current 12 of the transistor Q4 to be the same as the base current Ib of the input transistor Q51 of the error amplifier 16 when the rated voltage is outputted; hence, when the error amplifier is provided with a transistor having a single input level, or when the output potential resistances R31 and R32 have high pressures, it is possible to stabilize the output voltage Vo with high accuracy without being affected by the irregularity of the current amplifier factor hFE of the input transistor Q51.

As described above, the direct-current stabilization power supply device 11 of the present invention allows the overcurrent protective circuit 14 to perform an overcurrent protective operation, which shows a drooping characteristic indicated by reference numerals L1-L2-L3 of Fig.2, by using the power transistor TR and the current detection resistance Rp which is inserted in series. Thus, it is possible to prevent power of the reference numeral A region of Fig. 2 from being added to the power transistor TR, and in the event of a short circuit, in addition to the drooping characteristic, the short-circuit protective circuit 15 shows the fold-back characteristic indicated by the reference numerals L1-L4-L5-L6, so that power load indicated by the reference numeral B can be reduced from the power transistor TR, and the reference numerals L1-L2-L6 indicate the combined characteristics which can protect the power transistor TR. Consequently, as shown in the equation(12), the maximum value of the output current, that has conventionally needed to be more than three times as large as the rated current value, can be reduced to approximately two times, and the chip area of the output transistor can be dramatically reduced, resulting in a lower cost. Further, this arrangement can also reduce the withstand voltage of the load-side circuit.

Further, upon outputting the rated voltage, the resistance value of the referenced resistance Rr is subjected to a trimming adjustment so as to allow the base current I2 of the transistor Q4 to be equal to the base current Ib of the input transistor Q51 of the error amplifier 16. Thus, when the error amplifier is provided with a transistor having a single input level, or when the output pressure resistances R31 and R32 have high resistance, it is possible to stabilize the output voltage Vo with high accuracy without being affected by the irregularity of the current amplifier factor hFE of the input transistor Q51.

Furthermore, regarding the resistance R2, the resistance value is adjusted by trimming, which varies the resistance value in accordance with the bit number of trimming. However, for instance, occurrence of irregularity in the process, that has been conventionally about $\pm$ 20[%], can be reduced to about $\pm$ 10[%]; therefore, it is possible to adjust the maximum current with high accuracy and to reduce the chip area.

Furthermore, the base current Id is determined by the following equation:

$$Id = \{[Vref1 + Vbe(Q24) - Vbe(Q23)] \times R2/(R1 + R2) + Vbe(Q20) - Vbe(Q23)\}/Rs \quad \cdots(16)$$

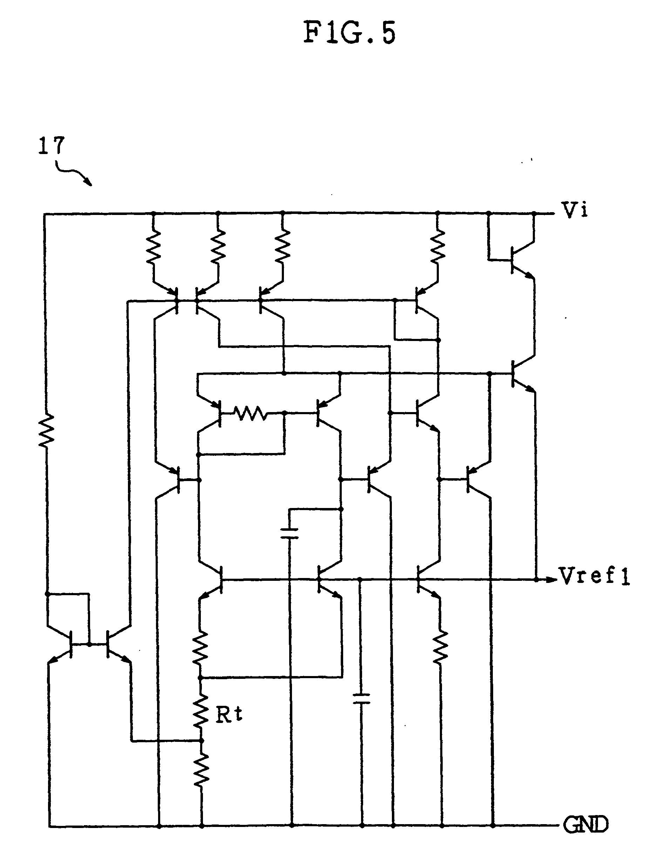

Meanwhile, for example, the reference voltage source 17 has a construction shown in Fig. 5. The present invention performs a trimming adjustment on a resistance indicated by a reference numeral Rt in the reference voltage source 17 so as to adjust the reference voltage Vref1. This arrangement makes it possible to control the base current with higher accuracy and to reduce the chip area of the output transistor.

Additionally, the direct-current stabilization power supply device of the present invention is also allowed to have a construction in which the base of the fourth transistor Q4 is connected with the input terminal of the error amplifier to which the output voltage returns, and the referenced resistance Rr is set so as to allow the base current of the fourth transistor Q4 to be equal to the base current of the input transistor Q51 of the error amplifier upon outputting the rated voltage.

In the above-mentioned arrangement, the output voltage normally returns to the error amplifier via the output partial pressure resistances, and the base current of the input transistor Q51 of the error amplifier is supplied via the output partial potential resistances; meanwhile, as described in the present invention, in the construction in which a current corresponding to an output voltage is applied to the referenced resistance Rr of the short-circuit protective circuit, the base current of the input transistor Q51 of the error amplifier is supplied from the base of the fourth transistor Q4.

Therefore, when the base current of the fourth transistor Q4 is set so as to be equal to the base current of the input transistor Q51 upon outputting the rated voltage, the base current is not supplied via the output partial potential resistances; thus, even when the output partial potential resistances have high resistances for saving power, the base current does not cause a voltage drop in the output partial potential resistances, so that it is possible to eliminate an error of the rated output voltage, that is caused by irregularity of hFE of the input transistor Q51.

Namely, the base of the fourth transistor Q4 of the short-circuit protective circuit is connected with the input terminal of the error amplifier so as to supply base current of the input transistor Q51 of the error amplifier from the base of the fourth transistor Q4, and the referenced resistance Rr is adjusted so as to equalize the current supplied from the transistor Q4 with the base current of the input transistor Q51 upon outputting the rated voltage.

For this reason, it is possible to eliminate a current supplied via the output partial potential resistances to the input transistor Q51; thus, even when the output partial potential resistances have high resistances for saving power, the base current does not cause a voltage drop in the output partial potential resistances, so that it is possible to eliminate an error of the rated output voltage, that is caused by irregularity of hFE in the input transistor Q51.

Also, the direct-current stabilization power supply device of the present invention can also carry out a trimming adjustment on either the partial potential resistance R1 or R2.

The above-mentioned arrangement makes it possible to suppress the base current of the PNP transistor with high accuracy in the event of an output short circuit, to achieve a smaller current margin of the PNP transistor, and to further reduce the chip area.

Furthermore, the direct-current stabilization power supply device of the present invention can also perform a trimming adjustment on the resistance of the reference voltage source which generates the reference voltage.

The above-mentioned arrangement makes it possible to improve temperature property of the reference voltage, resulting in a better temperature property of the base current of the PNP transistor; thus, it is possible to achieve an overcurrent protective operation and/or a short-circuit protective operation with higher accuracy.

**Claims**

1. A direct-current stabilization power supply device in which a power transistor and a control section (12) are sealed into a package, said power transistor (TR) acting as a power element between an input and an output terminal (P1, P2), said control section (12) has an error amplifier (16) comparing an output voltage (V0) of said power transistor (TR) with a predetermined reference voltage (Vref1) for controlling a base current of said power transistor (TR) in accordance with a difference between said output voltage (V0) and said predetermined reference voltage, wherein said control section (12) has a short-circuit protective circuit (15) including:

   a base resistance (Rs) for detecting a base current (Id) of said power transistor (TR),
   a base current generating section (Q12; Q1, Q2) which is disposed between said base resistance (Rs) and a base of said power transistor (TR) and which amplifies a control current corresponding to a difference between said output voltage and said reference voltage (Vref1) so as to generate said base current (Id),

   **characterized in that** said control section further includes
   a referenced resistance (Rr),
   a current drawing section (Q3, Q4) which connects said referenced resistance (Rr) between power source lines and which draws a larger current from an input power source line into said referenced resistance (Rr) as said output voltage becomes lower,
   a partial potential resistance divider section (R1, R2) for dividing a terminal voltage of said referenced resistance (Rr), and
   a current mirror circuit (CM1) for adjusting said control current so as to balance a partial potential value of said partial potential resistance divider section (R1. R2) with a voltage between the terminals of said base resistance (Rs).

2. The direct-current stabilization power supply device as defined in claim 1, further comprising a current detection resistance (Rp) formed in series with said power transistor, wherein said control section includes an overcurrent protective circuit which monitors a voltage between terminals of said current detection resistance and performs an overcurrent protective operation when a voltage between the terminals exceeds a predetermined value.

3. The direct-current stabilization power supply device as defined in claim 1 or 2, wherein said base current generating section includes a first and a second transistor (Q1 and Q2) that make a Darlington connection.

4. The direct-current stabilization power supply device as defined in any one of claims 1 through 3, wherein said current drawing section includes a third and a fourth transistor (Q3 and Q4).

5. The direct-current stabilization power supply device as defined in claim 4, wherein a base of said fourth transistor (Q4) is connected with an input terminal of said error amplifier to which said output voltage (V0) returns, and said referenced resistance (Rr) is set so as to allow a base current of said fourth transistor (Q4) to be equal to a base current of an input transistor (Q51) of said error amplifier (16) upon outputting a rated voltage.

6. The direct-current stabilization power supply device as defined in any one of claims 1 through 5, wherein said partial potential resistance divider section includes partial potential dividing resistances (R1 and R2).

7. The direct-current stabilization power supply device as defined in claim 6, wherein a trimming adjustment is performed on at least one of said partial potential dividing resistances (R1 and R2).

8. The direct-current stabilization power supply device as defined in any one of claims 1 through 7, wherein a trimming adjustment is performed on a resistance of a voltage source which generates said reference voltage (Vref1).

9. The direct-current stabilization power supply device as defined in any one of claims 1 through 8, wherein said power transistor is a PNP transistor.

10. The direct-current stabilization power supply device as defined in any one of claims 1 through 9, further comprising:

a series circuit, provided between power source lines (21, 22), including a fifth transistor (Q24) of which the base receives a constant voltage and the emitter is connected to a constant current source (F3);
a third transistor (Q3) of which a base is connected with a connecting point of the constant current source (F3) and the emitter of the fifth transistor (Q24) and outputs emitter voltage (Va) corresponding to a voltage of the connecting point,

wherein one end of the referenced resistance (Rr) is connected with the connecting point of the constant current source (F3) and the emitter of the fifth transistor (Q24).

**Patentansprüche**

1. Gleichstromstabilisierungs-Energieversorgungsvorrichtung, in welcher ein Leistungtransistor und ein Steuerabschnitt (12) in einem Gehäuse versiegelt sind, wobei der Leistungstransistor (TR) als ein Leistungselement zwischen einem Eingangs- und einem Ausgangsanschluss (P1, P2) wirkt, wobei der Steuerabschnitt (12) einen Fehlerverstärker (16) aufweist, der eine Ausgangsspannung (V0) des Leistungstransistors (TR) mit einer vorbestimmten Referenzspannung (Vref1) vergleicht, zum Steuern eines Basisstroms des Leistungstransistors (TR) in Übereinstimmung mit einem Unterschied zwischen der Ausgangsspannung (V0) und der vorbestimmten Referenzspannung, wobei der Steuerabschnitt (12) eine Kurzschluss-Schutzschaltung (15) aufweist, umfassend:

einen Basiswiderstand (Rs) zum Erfassen eines Basisstroms (Id) des Leistungstransistors (TR),
einen Basisstrom-Erzeugungsabschnitt (Q12; Q1, Q2), der zwischen dem Basiswiderstand (Rs) und einer Basis des Leistungstransistors (TR) angeordnet ist, und der einen Steuerstrom, der einem Unterschied zwischen der Ausgangsspannung und der Referenzspannung (Vref1) entspricht, verstärkt, um so den Basisstrom (Id) zu erzeugen,

**dadurch gekennzeichnet, dass** der Steuerabschnitt ferner einschließt:

einen Referenzwiderstand (Rr),
einen Stromziehabschnitt (Q3, Q4), der den Referenzwiderstand (Rr) zwischen Energiequellenleitungen verbindet und der einen größeren Strom von einer Eingangsenergiequellenleitung in den Referenzwiderstand (Rr) zieht, wenn die Ausgangsspannung niedriger wird,
einen Teilpotenzial-Widerstandsteilerabschnitt (R1, R2) zum Teilen einer Anschlussspannung des Referenzwiderstands (Rr), und
eine Stromspiegelschaltung (CM1) zum Einstellen des Steuerstroms, um so einen Teilpotenzialwert des Teilpotenzial-Widerstandsteilerabschnitts (R1, R2) mit einer Spannung zwischen den Anschlüssen des Basiswiderstands (Rs) auszugleichen.

2. Gleichstromstabilisierungs-Energieversorgungsvorrichtung nach Anspruch 1, weiter umfassend einen Stromerfassungswiderstand (Rp), der in Reihe zu dem Leistungstransistor gebildet ist, wobei der Steuerabschnitt eine Überstromschutzschaltung einschließt, die eine Spannung zwischen Anschlüssen des Stromerfassungswiderstands überwacht und einen Überstromschutzbetrieb durchführt, wenn eine Spannung zwischen den Anschlüssen einen vorbestimmten Wert überschreitet.

3. Gleichstromstabilisierungs-Energieversorgungsvorrichtung nach Anspruch 1 oder 2, wobei der Basisstrom-Erzeugungsabschnitt einen ersten und einen zweiten Transistor (Q1, Q2) einschließt, die eine Darlington-Verbindung ausführen.

4. Gleichstromstabilisierungs-Energieversorgungsvorrichtung nach einem der Ansprüche 1 bis 3, wobei der Stromziehabschnitt einen dritten und einen vierten Transistor (Q3, Q4) einschließt.

**5.** Gleichstromstabilisierungs-Energieversorgungsvorrichtung nach Anspruch 4, wobei eine Basis des vierten Transistors (Q4) mit einem Eingangsanschluss des Fehlerverstärkers verbunden ist, zu welchem die Ausgangsspannung (V0) zurückkehrt, und der Referenzwiderstand (Rr) so eingestellt ist, es zuzulassen, dass ein Basisstrom des vierten Transistors (Q4) gleich einem Basisstrom eines Eingangstransistors (Q51) des Fehlerverstärkers (16) ist, auf ein Ausgeben einer Nennspannung hin.

**6.** Gleichstromstabilisierungs-Energieversorgungsvorrichtung nach einem der Ansprüche 1 bis 5, wobei der Teilpotenzial-widerstandsteilerabschnitt Teilpotenzial-Teilungswiderstände (R1, R2) einschließt.

**7.** Gleichstromstabilisierungs-Energieversorgungsvorrichtung nach Anspruch 6, wobei eine Abgleicheinstellung an zumindest einem der Teilpotenzial-Teilungswiderstände (R1 und R2) durchgeführt wird.

**8.** Gleichstromstabilisierungs-Energieversorgungsvorrichtung nach einem der Ansprüche 1 bis 7, wobei eine Abgleicheinstellung an einem Widerstand einer Spannungsquelle durchgeführt wird, die die Referenzspannung (Vref1) erzeugt.

**9.** Gleichstromstabilisierungs-Energieversorgungsvorrichtung nach einem der Ansprüche 1 bis 8, wobei der Leistungstransistor ein PNP-Transistor ist.

**10.** Gleichstromstabilisierungs-Energieversorgungsvorrichtung nach einem der Ansprüche 1 bis 9, weiter umfassend:

eine Reihenschaltung, die zwischen Energiequellenleitungen (21, 22) bereitgestellt ist, einschließend einen fünften Transistor (24), dessen Basis eine Konstantspannung aufnimmt und dessen Emitter mit einer Konstantstromquelle (F3) verbunden ist;
einen dritten Transistor (Q3), dessen Basis mit einem Verbindungspunkt der Konstantstromquelle (F3) und des Emitters des fünften Transistors (Q24) verbunden ist, und der eine Emitterspannung (Va) ausgibt, die einer Spannung des Verbindungspunktes entspricht,

wobei ein Ende des Referenzwiderstands (Rr) mit dem Verbindungspunkt der Konstantstromquelle (F3) und des Emitters des fünften Transistors (24) verbunden ist.

## Revendications

**1.** Dispositif d'alimentation avec stabilisateur à courant continu dans lequel un transistor de puissance et une section de commande (12) sont fixés dans un boîtier, ledit transistor de puissance (TR) jouant le rôle d'un élément de puissance entre une borne d'entrée et une borne de sortie (P1, P2), ladite section de commande (12) comportant un amplificateur d'erreur (16) qui compare une tension de sortie (V0) dudit transistor de puissance (TR) à une tension de référence prédéterminée (Vref1), pour commander un courant de base dudit transistor de puissance (TR) en fonction d'une différence entre ladite tension de sortie (V0) et ladite tension de référence prédéterminée, dans lequel ladite section de commande (12) comporte un circuit de protection contre les court-circuits (15) comprenant :

une résistance de base (Rs) destinée à détecter un courant de base (Id) dudit transistor de puissance (TR),
une section de génération de courant de base (Q12 ; Q1, Q2) qui est disposée entre ladite résistance de base (Rs) et une base dudit transistor de puissance (TR) et qui amplifie un courant de commande correspondant à une différence entre ladite tension de sortie et ladite tension de référence (Vref1) afin de générer ledit courant de base (Id),

**caractérisé en ce que** ladite section de commande comprend en outre :

une résistance référencée (Rr),
une section d'extraction de courant (Q3, Q4) qui relie ladite résistance référencée (Rr) entre des lignes de source d'alimentation et qui absorbe, dans ladite résistance référencée (Rr), un courant plus important d'une ligne de source d'alimentation d'entrée au fur et à mesure que ladite tension de sortie diminue,
une section de diviseur de résistance de potentiel partiel (R1, R2) destiné à diviser une tension de borne de ladite résistance référencée (Rr), et
un circuit de miroir de courant (CM1) destiné à ajuster ledit courant de commande afin d'équilibrer une valeur de potentiel partiel de ladite section de diviseur de résistance de potentiel partiel (R1, R2) avec une tension présente entre les bornes de ladite résistance de base (Rs).

2. Dispositif d'alimentation à stabilisation en courant continu selon la revendication 1, comprenant en outre une résistance de détection de courant (Rp) disposée en série avec ledit transistor de puissance, dans lequel ladite section de commande comporte un circuit de protection contre les surcharges en courant qui contrôle une tension entre les bornes de ladite résistance de détection de courant et qui procède à une opération de protection contre les surcharges en courant lorsqu'une tension entre les bornes dépasse une valeur prédéterminée.

3. Dispositif d'alimentation à stabilisation en courant continu selon la revendication 1 ou 2, dans lequel ladite section de génération de courant de base comporte un premier et un second transistors (Q1 et Q2) qui constituent une connexion Darlington.

4. Dispositif d'alimentation à stabilisation en courant continu selon l'une quelconque des revendications 1 à 3, dans lequel ladite section d'extraction de courant comporte un troisième et un quatrième transistors (Q3 et Q4).

5. Dispositif d'alimentation à stabilisation en courant continu selon la revendication 4, dans lequel une base dudit quatrième transistor (Q4) est reliée à une borne d'entrée dudit amplificateur d'erreur auquel ladite tension de sortie (V0) revient, et ladite résistance référencée (Rr) est fixée afin de permettre l'égalité d'un courant de base dudit quatrième transistor (Q4) avec un courant de base d'un transistor d'entrée (Q51) dudit amplificateur d'erreur (16) lors de la production d'une tension nominale.

6. Dispositif d'alimentation à stabilisation en courant continu selon l'une quelconque des revendications 1 à 5, dans lequel ladite section de diviseur de résistance de potentiel partiel comporte des résistances de division de potentiel partiel (R1 et R2).

7. Dispositif d'alimentation à stabilisation en courant continu selon la revendication 6, dans lequel un réglage de compensation est effectué sur au moins l'une des dites résistances de division de potentiel partiel (R1 et R2).

8. Dispositif d'alimentation à stabilisation en courant continu selon l'une quelconque des revendications 1 à 7, dans lequel un réglage de compensation est effectué sur une résistance d'une source de tension qui génère ladite tension de référence (VRef1).

9. Dispositif d'alimentation à stabilisation en courant continu selon l'une quelconque des revendications 1 à 8, dans lequel ledit transistor de puissance est un transistor PNP.

10. Dispositif d'alimentation à stabilisation en courant continu selon l'une quelconque des revendications 1 à 9, comportant en outre :

un circuit en série, placé entre des lignes de source d'alimentation (21, 22), comportant un cinquième transistor (Q24) dont la base reçoit une tension constante et dont l'émetteur est relié à une source de courant constant (F3) ;
un troisième transistor (Q3) dont une base est reliée à un point de connexion de la source de courant constant (F3) et de l'émetteur du cinquième transistor (Q24) et qui produit une tension d'émetteur (Va) correspondant à une tension du point de connexion,

dans lequel une extrémité de la résistance référencée (Rr) est reliée au point de connexion de la source de courant constant (F3) et de l'émetteur du cinquième transistor (Q24).

FIG.1

DIRECT-CURRENT STABILIZATION POWER SUPPLY DEVICE:11

CURRENT DETECTION RESISTANCE:Rp

TR:POWER TRANSISTOR

P1

Vi

P2

Vo

Io

Vs

CONTROL IC 12

Vref2

18

19

P14

P12

P13

Id

R31

C11

Vadj

P11

16

C1

C2

Q12

17

Vref1

Q10

Q20

Rs

R32

P3

13:CONSTANT VOLTAGE CIRCUIT

P15

GND

14:OVERCURRENT PROTECTIVE CIRCUIT

15:SHORT-CIRCUIT PROTECTIVE CIRCUIT

EP 0 994 401 B1

# FIG.2

EP 0 994 401 B1

FIG.3

FIG.4

EP 0 994 401 B1

# FIG. 5

FIG.6

EP 0 994 401 B1

# FIG.7

OUTPUT
VOLTAGE vo

0

ios

OUTPUT CURRENT io

EP 0 994 401 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4593338 A
- US 4899098 A

- DE 3931893 A